## Europäisches Patentamt

## European Patent Office

## Office européen des brevets

(11) Publication number: **0 081 903**
**A1**

(12) # EUROPEAN PATENT APPLICATION

(21) Application number: **82305779.9**

(22) Date of filing: **01.11.82**

(51) Int. Cl.³: **B 62 D 27/06, E 05 C 3/06**

(30) Priority: **06.11.81 GB 8133604**
**06.11.81 GB 8133605**
**06.11.81 GB 8133606**

(43) Date of publication of application: **22.06.83**
**Bulletin 83/25**

(84) Designated Contracting States: **AT BE CH DE FR IT LI LU NL SE**

(71) Applicant: **R.G. Trade Supplies & Engineering Ltd., Foley Street, Fenton Stoke-on-Trent (GB)**

(72) Inventor: **Hill, Reginald George, R.G. Trade Supplies & Engineering Ltd. Foley St., Fenton Stoke-on-Trent (GB)**
Inventor: **Hill, Gary, R.G. Trade Supplies & Engineering Ltd. Foley St., Fenton Stoke-on-Trent (GB)**

(74) Representative: **Drever, Ronald Fergus et al, Swindell & Pearson 44, Friar Gate, Derby DE1 1DA (GB)**

(54) **Improvements in or relating to vehicle sideboard arrangements.**

(57) A vehicle sideboard arrangement comprises a post (10) movably mounting a pair of latching members (34) which, when latched in a closed position present a flush outer surface on the post and in an open position extend in the same plane but 180° removed from the closed position. A hollow sideboard (12) has a projecting catch (44) which, in a raised position of the sideboard (12), overlies the post (10) and engages over a dowel (46) when the respective member (34) is open. Closure of the member (34) traps the catch (44) and retains the sideboard (12) raised, there being therefore no components protruding beyond the plane of the outer surface of the post (10) in either position of the latching members (34).

## Improvements in or Relating to
## Vehicle Sideboard Arrangements

The invention is concerned with improvements in or relating to sideboard arrangements on platforms of motor vehicles of the type where the sideboards are movable between raised and lowered positions, and is particularly concerned with releasably supporting the sideboards in the raised position.

Some previously proposed latch or catch arrangements of sideboard supports necessitate cutting or removal of metal from the aluminium sideboard, which is labour intensive and can result in a weakening of the sideboard assembly. Other arrangements require a member to be welded in place onto the sideboard and this, when aluminium sideboards are involved, can result in weakness. Certain of the known arrangements are disadvantageous in that components can protrude from the plane of the posts and sideboards can be dangerous to pedestrians and other road users, as well as persons loading or unloading the platforms. Other catch arrangements can lead to difficulties for the operator in closing the sideboard when the sideboards are distorted through use and when the load has been overset on the platform. Further, some overcentre catches apply leverage and strength longitudinally which does not offer strength where needed, i.e. loads pushing outwards on the platform of the vehicle.

It is an object of the present invention to provide an improved arrangement which obviates or mitigates such disadvantages.

According to the present invention there is provided a sideboard assembly for a platform of a vehicle, the sideboard assembly comprising a sideboard having an internal cavity and connecting means mounted partly within the internal cavity so as to extend beyond an end of the sideboard, the connecting means being adapted to be releasably retained on a post on the vehicle platform.

According to the present invention there is also provided a support assembly for a sideboard which pivots between a raised and a lowered position on a platform of a vehicle, the support assembly comprising a post, means for mounting the post on a platform of a vehicle, means on the post movable between a closed position in the path of movement of the sideboard relative to the post and an open position removed from said path of movement, the movable means in said closed position presenting the post with a substantially flush outwardly facing surface, and extending generally in the same plane in each of said closed and open positions.

Preferably the movable means is pivotally arranged on the post by pivot means engaging in elongate slots whereby the movable means moves through an angle of substantially 180° when moving between its open and its closed positions

The invention further provides a mounting assembly for a support for a sideboard which pivots between a raised and a lowered position on a platform of a vehicle, the mounting assembly comprising a post and means for releasably mounting the post on a platform of a vehicle, the mounting means being adapted to co-operate with an arrangement to be fixed to the platform, one of the mounting means and the fixed arrangement having elongate apertures and the other having locating members engagable in the apertures such that the position of the locating members in the apertures determines the ability of the post to be moved laterally of the platform.

An embodiment of the present invention will now be described by way of example only with reference to the accompanying drawings, in which :-

Fig. 1 is a front perspective view of a support assembly for a sideboard on a platform of a motor vehicle;

Fig. 2 is a sectional side elevation through part of the assembly of Fig. 1;

Fig. 3 is a partial rear perspective view of the assembly of Fig. 1;

Fig. 4 is a sectional side elevation through the part shown in Fig. 3 when in a mounted condition;

Fig. 5 is a front perspective view of a modified support assembly;

Fig. 6 is a front perspective view of a further modified support assembly;

Fig. 7 is a front perspective view of a sideboard arrangement for use with the support assembly;

Fig. 8 is an exploded perspective view of apparatus forming part of the assembly of Fig. 7; and

Fig. 9 is a rear view of the apparatus of Fig. 8 when mounted on a sideboard as viewed in Fig. 7.

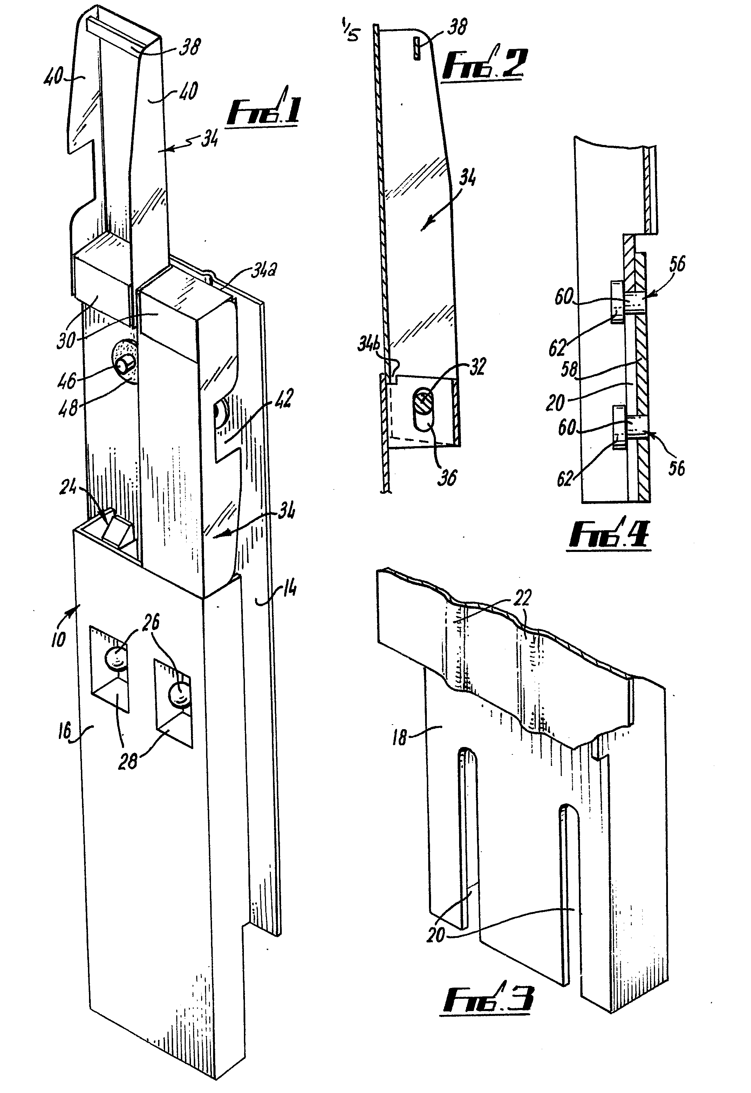

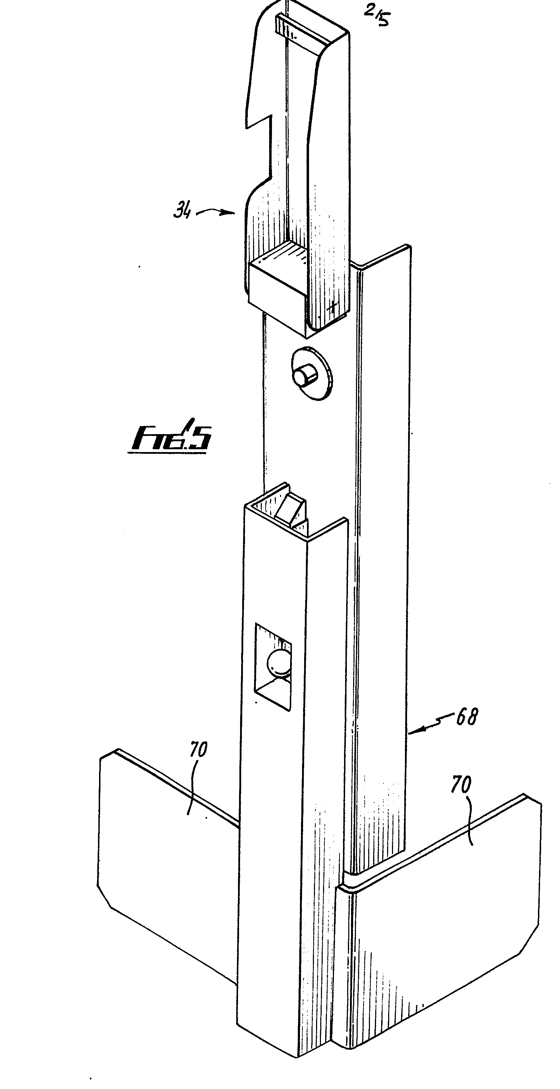

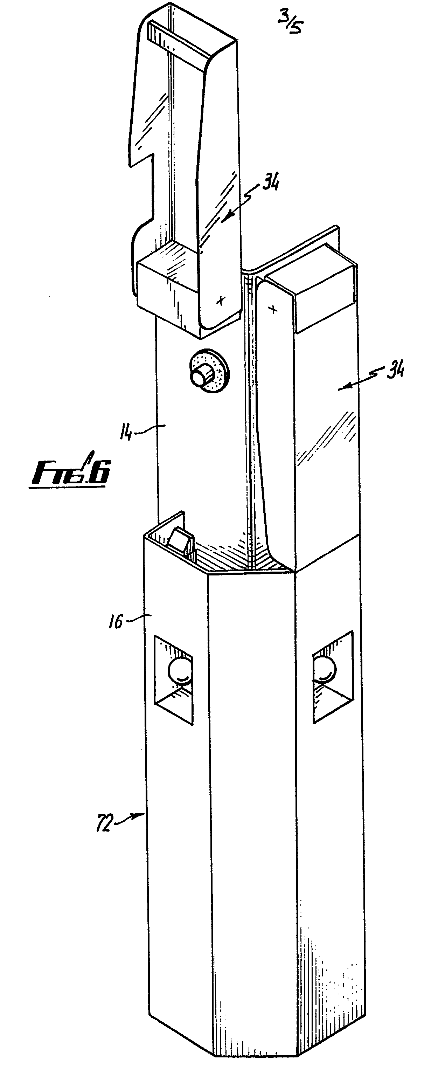

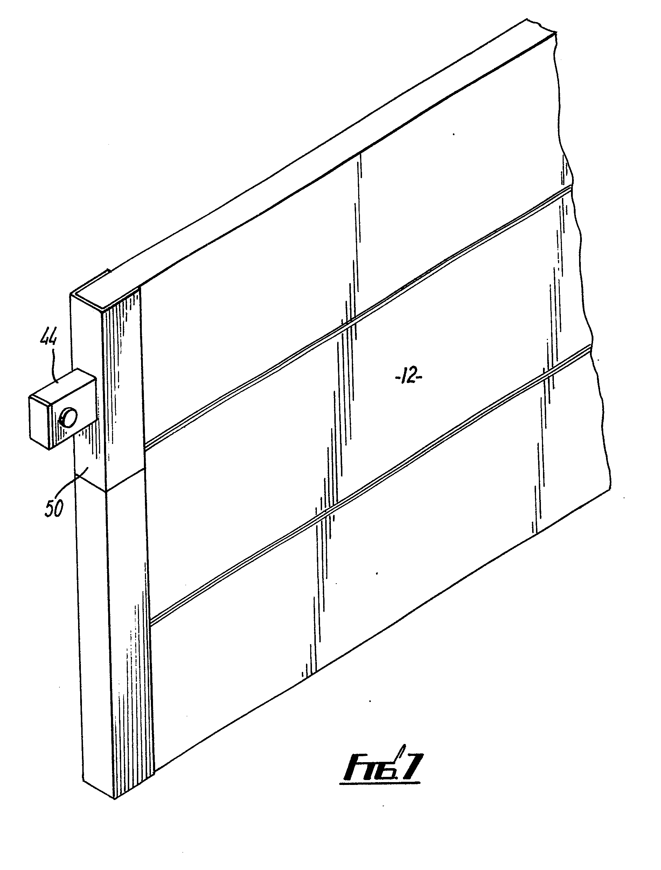

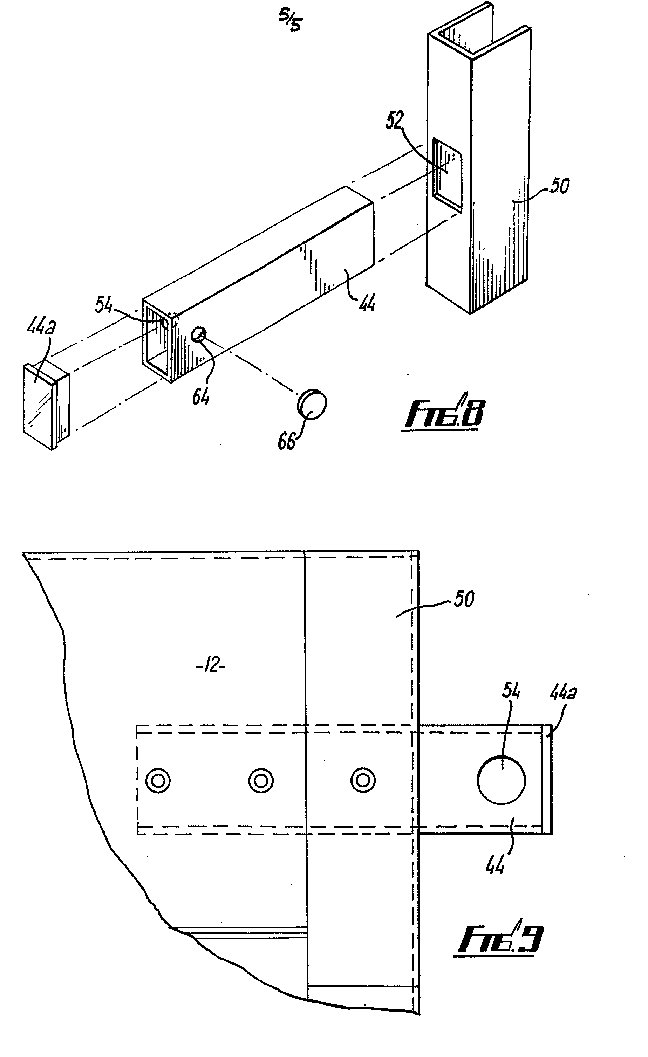

Referring to Figs. 1 to 4 and Figs 7 to 9 of the drawings, a support assembly comprising a post 10 is provided for mounting on a platform of a motor vehicle and is adapted to support at each side thereof a sideboard 12 which is hingedly mounted on the platform.

The post 10 is formed of metal and is defined by a substantially rectangular back plate 14 on the front face of which is welded a substantially U-shaped housing or member 16 so as to form a tubular part extending partway along the length of the back plate 14. The member 16 extends beyond the lower edge of the back plate 14 and, on the extended part, has a rear wall 18 provided with a pair of parallel, spaced apart, vertically extending slots 20 opening onto the lower edge of the wall 18. The back plate 14 is formed with a pair of parallel longitudinally extending stiffening ribs 22. Further stiffening ribs may be provided if desired.

A pair of levers extend longitudinally within the member 16, are guided by internal sleeves, and terminate in latches 24. The levers are spring biased such that the latches 24 normally extend beyond the upper edge of the member 16. The levers are operable by means of knobs 26 accessible through openings 28 in the front face of the member 16.

At the upper edge of the back plate 14 there is fixed to the latter a pair of spaced apart supports 30, each end of which is provided with an elongate vertically extending slot 36. Each of a pair of substantially U-shaped latching members 34 mounts a pivot member 32 between its legs at one end, whereby each latching member 34 can be pivotally mounted on a respective one of the supports 30 by the location of the pivot 32 within the slots 36. A pair of latch members 34 are thus provided side by side on the back plate 14, each of the latching members 34 being pivotal between a closed position with its base outermost, as shown with the right-hand member 34 in Fig. 1, and an open or parking position extending vertically and facing outwardly from the back plate 14, as shown with the left-hand member 34 in Fig. 1 and the member 34 in Fig. 2. In the parking position an edge 34a of each member 34 engages in a locking notch 34b.

At its other or free end, each of the latching members 34 has a latching bar 38 extending between the legs 40 of the latching member 34 for co-operation with a respective one of the latches 24 as hereinafter described.

Each of the latching members 34 is arranged such that in a closed position, its outer face is substantially flush with the outer face of the member 16 and its laterally outer edge is substantially flush with the respective outer edge of the member 16. Also each of the latching members 34 has a recess 42 in the free edge of the outwardly facing leg for co-operation with a projecting member or catch 44 on the sideboard 12 as hereinafter described. A locating dowel 46 is provided on the back plate 14 at the location of each latching member 34 for co-operation with the catch 44 as hereinafter described and a rubber buffer 48 is provided around the dowel 46.

The sideboard assembly comprises the sideboard 12 formed preferably of extruded aluminium and thereby providing an internal cavity. For mounting on an upper part at each end of the sideboard 12, there is provided a channel 50 having a through slot 52 on its base. The channel 50 is mounted on the end of the sideboard 12 with the base extending vertically across the open end of the sideboard cavity, thereby enabling access to the cavity through the slot 52. The catch 44 is located over the majority of its length within the cavity by being positioned through the slot 52 and can be fixed in position by suitable means, for example rivets, preferably attaching the catch 44 to the wall of the sideboard 12 which is innermost when the sideboard is in a vertical position on the vehicle platform. The catch 44 may of course be fixed to the other side wall if desired with suitable packing being utilised where appropriate.

The catch 44 is formed of a hollow rectangular configuration and on one face, the face facing inwardly of the vehicle platform when the sideboard is in a vertical position, is provided with a hole 54. When the sideboard 12 is pivoted to a vertical position, the catch 44 locates against the post 10 and the hole 54 locates over a respective one of the dowels 46. The catch 44 has an outer end cap 44a preferably of plastics material.

The post 10 is mounted on the vehicle platform by engagement of the slots 20 in the back plate 18 over respective aligned pairs of locating pegs 56 provided on a plate 58 fixed to the platform. Each locating peg 56 has a shank portion 60 and a head portion 62, whereby, when the slot 20 locates over the shank portion 60, the head portion 62, being wider than the slot 20, prevents lateral removal of the support assembly 10 from the platform. This provides a mounting arrangement which is simple and inexpensive to manufacture and the post can only be removed by manually lifting the latter such that the pegs 56 become clear of the slots 20.

To lock the sideboard 12 at a respective side of the post, the sideboard 12 is pivoted upwardly about its hinge with the respective latching member 34 in the open position until the catch 44 engages against the back plate 14. The latching member 34 is then manually moved from the open or parking position to its closed position deflecting the latch 24 which, then under its biasing force, engages over the bar 38 to retain the latching member 34 in position. The latching member recess 42 engages over the catch 44. The rubber

- 7 -

0081903

buffer 48 prevents rattling of the sideboard against the back plate 14 and also acts as a spacer, and the catch 44, on the face opposite the hole 54, is provided with an aperture 64 for receiving a grommet 66 to retain the sideboard in position with the dowel 46 located in the hole 54. To release the sideboard 12, the respective knob 26 is manually moved to release the latch 24 and the latching member 34 may then be moved to its open or parking position. The sideboard 12 is such that, in its upper position, it is retained flush with the outer faces of the latching members 34 and the member 16. The parking position of the latching members 34 can be vertical and is advantageous in that there is no part projecting out of the vertical place of the front face of the member 16.

A modified post 68 (Fig. 5) having a single latching member 34 may be utilised at the forward end of the vehicle platform and such a post may be fixedly mounted on the platform, for example by means of bolting mounting plates 70 to the platform, as removal of the front post 68 may not be necessary to move loads laterally outwardly from the platform. Further, a modified post 72 (Fig. 6) may be provided for mounting at a rearward corner of the vehicle platform and comprises an angled back plate 14 and member 16 such that latching members 34 are available to latch sideboards at right angles to one another. In such an arrangement the back plate 14 has a right-angled cross-section while the tubular member 16 generally has a right-angled cross-section but the corner edge is removed to reduce corner projection.

In a further modification, where posts are to be used in connection with curtain-sided vehicles, tracks may be provided on the vehicle roof and the posts may be movably mounted by means of runners and tracks, the runners being provided on upper hinged extensions. When the sideboards are released from a post, the post can be movable upwardly about the hinge and along the track to provide access to the platform.

The provision of a catch fixed within the cavity of the sideboard produced a flush finish between the post and sideboard and considerably strengthens the structure.

Various modifications may be made without departing from the invention. For example the sideboard assembly may be used with posts other than those of the type described and shown provided there is a facility for latching of the catch. Also the latching members may be spring biased at least part way to the open position. Further the back plate 18 may have pegs instead of slots with complementary slots provided on the plate fixed to the platform.

0081903

## Claims:

1.    A support assembly for a sideboard which pivots between a raised and a lowered position on a platform of a vehicle, the support assembly comprising a post, means for mounting the post on a platform of a vehicle, and means on the post movable between a closed position in the path of movement of the sideboard relative to the post and an open position removed from said path of movement, characterised in that the movable means (34) in said closed position presents the post (10) with a substantially flush outwardly facing surface, and extends generally in the same plane in each of said closed and open positions.

2.    A sideboard assembly for a platform of a vehicle characterised in that the sideboard assembly comprises a sideboard (12) having an internal cavity and connecting means (44) mounted partly within the internal cavity so as to extend beyond an end of the sideboard (12), the connecting means (44) being adapted to be releasably retained on a post (10) on the vehicle platform.

3.    An assembly according to claim 1, characterised in that the movable means (34) is pivotally arranged on the post (10) by pivot means (32) engaging in elongate slots (36) whereby the movable means (34) moves through an angle of substantially 180° when moving between its open and its closed positions.

4.    An assembly according to claim 3, characterised in that the post (10) defines a notch (34b) in which the movable means (34) engages in said open position so as to be retained in the latter.

5.    An assembly according to any of claims 1, 3 or 4 characterised in that latch means (24) is provided for retaining the movable means (34) in said closed position

6.    An assembly according to any of claims 1 or 3 to 5, characterised in that a pair of said movable means (34) are provided for releasably retaining a sideboard (12) at each side of the post (10).

7.    An assembly according to any of claims 1 or 3 to 6, characterised in that means are provided for movably mounting the post on a vehicle roof via a hinged part.

8.    An assembly according to claim 2, characterised in that the connecting means comprises an elongate member (44) fixed to a wall of the sideboard (12).

9.    An assembly according to claim 1 or 3, characterised in that the connecting means (44) has a locating hole (54) on one face for location on a projection (46) on the post (10).

10.    An assembly according to any of claims 1, 3 or 4, characterised in that the connecting means is supported by a channel member mounted on said end of the sideboard and having a slot through which the connecting means extends.

11.    A mounting assembly for a support for a sideboard which pivots between a raised and a lowered position on a platform of a vehicle, the mounting assembly comprising a post and means for releasably mounting the post on a platform of a vehicle, characterised in that the mounting means (18, 20) is adapted to co-operate with an arrangement (56, 58) to be fixed to the platform, one of the mounting means and the fixed arrangement having elongate apertures (20) and the other having locating members (56) engagable in the apertures (20) such that the position of the locating members (56) in the apertures (20) determines the ability of the post (10) to be moved laterally of the platform.

12. An assembly according to claim 11, characterised in that the mounting means (34) comprises a pair of parallel spaced apart elongate slots (20) opening onto a free edge, and the fixed arrangement comprises a mounting plate (58) supporting locating pegs (56) each of which has a shank portion (60) of a dimension less than the width of the slot (20) and a head portion (62) of a dimension greater than the width of the slot (20).

*Fig.1*

*Fig.2*

*Fig.4*

*Fig.3*

FIG.5

0081903

_Fig.6_

44

50

-12-

FIG 7

Fig.8

Fig.9

0081903

European Patent Office

**EUROPEAN SEARCH REPORT**

Application number

EP 82 30 5779

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 62 D 27/06 |
| X | GB-A-2 066 168 (BASFORD) | 1-3,5, 6,8,11 | E 05 C 3/06 |
| | * Entire document * | | |
| | --- | | |
| A | DE-B-2 635 907 (HESTERBERG & SÖHNE) | | |
| | --- | | |
| A | DE-B-2 507 473 (HESTERBERG & SÖHNE) | | |
| | ----- | | |

**TECHNICAL FIELDS SEARCHED (Int. Cl. ³)**

B 62 D 27/00
B 62 D 33/00
E 05 C 3/00
E 05 C 19/00

The present search report has been drawn up for all claims

| Place of search | Date of completion of the search | Examiner |
|---|---|---|
| BERLIN | 27-01-1983 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82